## Europäisches Patentamt

## European Patent Office

## Office européen des brevets

(11) Publication number: **0 171 269**
**A2**

# EUROPEAN PATENT APPLICATION

(21) Application number: **85305511.9**

(22) Date of filing: **02.08.85**

(51) Int. Cl.⁴: **E 01 F 9/00**

(30) Priority: **02.08.84 GB 8419760**

(43) Date of publication of application: **12.02.86**
**Bulletin 86/7**

(84) Designated Contracting States: **AT BE CH DE FR IT LI LU NL SE**

(71) Applicant: **Keogh, Bernard, 200 Hipswell Highway, Coventry West Midlands (GB)**
Applicant: **Keogh, Michael, "Bondgate" 22 Bond End, Monks Kirby Nr. Rugby (GB)**

(72) Inventor: **Keogh, Bernard, 200 Hipswell Highway, Coventry West Midlands (GB)**
Inventor: **Keogh, Michael, "Bondgate" 22 Bond End, Monks Kirby Nr. Rugby (GB)**

(74) Representative: **Hallam, Arnold Vincent et al, T. Fletcher Wilson & Co. 9 Grosvenor House Grosvenor Road, Coventry West Midlands, CV1 3FZ (GB)**

(54) **Light reflecting devices.**

(57) A light reflecting device has a tubular body in the form of a plug (2) with external barbs (23) and a reflector disc (1) at one end (21), the disc having a reflective face (10) formed by a reflective material such as Reflexite (Registered Trade Mark).

In use, a hole is drilled in the relevant structure such as a roadside wall and the plug (2) forced into the hole with the reflective face facing outwardly of the wall. The barbs secure the plug in position and the device provides a convenient reflector for oncoming vehicle headlamps.

## Light Reflecting Devices

The present invention relates to light reflecting devices.

With the considerable increase in road traffic which has taken place over the past twenty years, the importance of road safety, particularly at dusk and at night, has increasingly been emphasised. Unlit or dimly lit roads present considerable hazards such as sharp bends, high kerbs and bridge supports. Many attempts have been made to make these more easily visible at night but these have generally involved considerable expense in providing sufficient lighting. So-called "cat's eyes" are expensive to manufacture and install and can only be positioned on the road surface itself.

The present invention seeks to provide a reflecting device which may be used for the purpose of warning or guiding vehicular traffic and which can be readily mounted in position.

Accordingly, the present invention provides a light reflecting device comprising a body having light reflecting means thereon, and retaining means adapted for retentive engagement with an opening therefor in a suitable structure such as brickwork, woodwork or the like whereby said light reflecting means is presented for light reflecting action.

0171269

The present invention is further described hereinafter, by way of example, with reference to the accompanying drawings, in which:

| | |
|---|---|
| Figure 1 | is sectional along the line 1-1 of Figure 2 of a first embodiment of the present invention; |
| Figure 2 | is a view of the embodiment of Figure 1 in the direction of arrow A; |
| Figure 3 | is a side elevation of a second embodiment of the present invention; |
| Figure 4 | is a sectional view of the embodiment of Figure 3; |
| Figure 5 | is a side elevation of the embodiment of Figure 3; |
| Figure 6 | is a plan view of a retaining washer; |
| Figures 7 and 8 | are a front elevation and plan view respectively of a further embodiment of the present invention; and |
| Figure 9 | is a side elevation of the embodiment of Figures 3 and 4 shown mounted on a motorway crash barrier. |

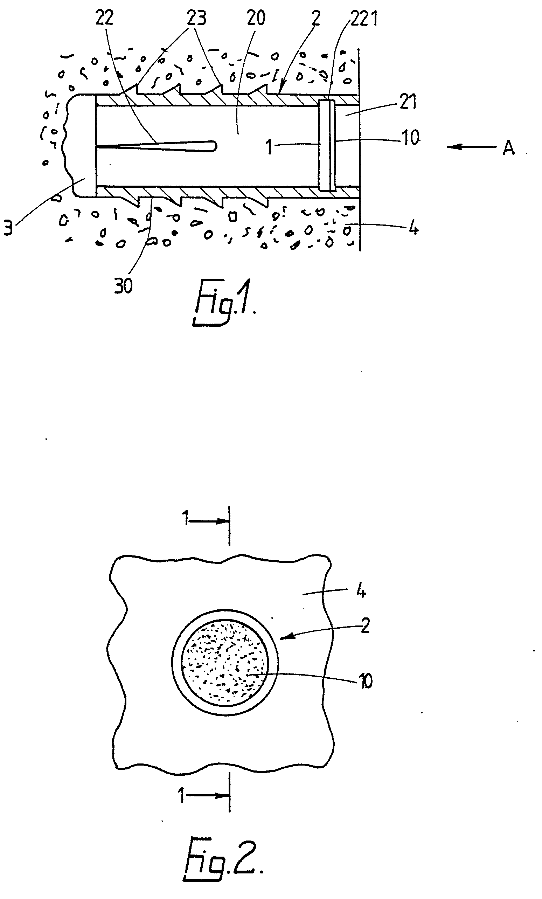

Referring to Figures 1 and 2 a reflector disc 1 is carried by a tubular (or solid) plug 2 near the normally outer open end 21 of the latter so as to be recessed in at said end.

The plug 2 is preferably of suitable plastics material and is in the nature of a wall plug for fixing purposes in that it is adapted to be driven for a retentive engagement or fit in a hole 3 therefor in brickwork 4, woodwork or other structure (including in some cases metal structure). Thus the plug 2 is shown provided on its exterior with barbs 23 whilst the rear part of the plug may be split longitudinally as at 22 i.e. at one or more places about its circumference for radial contraction with a resilient yielding action whereby the barbs 23 of the plug 2 are radially thrust into firm retentive engagement with the wall 30 of the hole 3. The barbs may be arcuate or extend around the full circumference of the plug 2.

The diameter of the plug 2 may be varied to provide a reflective area of the reflector disc 1 of preselected size, and may be of the order of 2.5 cm in diameter or thereabouts i.e. so that the hole 3 can still be produced by, for example, a masonry drill of a size which is readily available.

After the hole 3 has been made at the required position the left hand end of the plug 2 as seen in Figure 1 is inserted and the plug is hammered or otherwise driven home, the outer end 21 of the plug 2 beyond the reflector 1 protecting the latter from damage during installation.

Once the plug 2 is fully installed, the outer end 21 also serves to protect the reflector 1 against damage, and to some degree against the accumulation of dirt and rain, whilst any accumulated dirt on the face of the reflector 1 can be easily removed.

The plug 2 is shown of generally uniform diameter throughout its length but may be tapered outwardly towards its inner end to provide for suitable compression of the plug 2 for retentive engagement in the hole. If necessary the inner end portion of the plug bore 20 may receive an expander (not shown) which abuts the inner end of the hole 3 as the plug 2 is driven into position, the expander being dimensioned to cause the plug to expand as the expander is forced into the plug. The expander is conveniently tapered inwardly towards the plug outer end.

The reflector disc 1 is located in an annular groove 221 in the plug bore 22 e.g. with a snap fit or may be moulded into the plug 2. While shown recessed from the outer end of the plug the disc 1 may of course be positioned at the outer end. The reflective face 10 is preferably of the retro-reflective type providing myriad prismatic points (i.e. many thousand per square centimetre) such as the reflective material known under the Registered Trade Mark "Reflexite".

Several of the reflector plugs 2 can be fitted in positions of use e.g. in a wall, post or other structure especially for reflecting the light of vehicle headlamps or of other vehicle lamps such as reversing lamps for guidance when reversing a vehicle up to a loading/unloading platform.

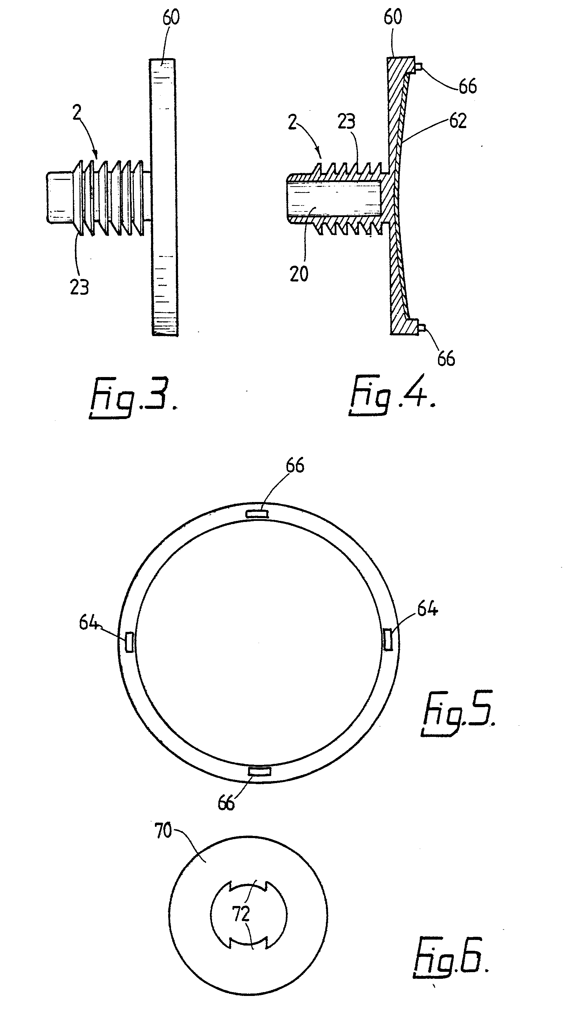

Figures 3 to 5 of the drawings show a further embodiment of the invention in which, although more vulnerable to damage, the plug 2 may be provided with an enlarged head 60 (preferably generally planar in shape) receiving a reflector 62 of corresponding size, such as by snap engagement with locating slots and lugs 64, 66, the head abutting the exterior of the brickwork when the plug 2 is fully driven into the hole.

Although the head 60 is shown integral with the plug 2 it may of course be detachable. In such a case the plug bore may be dimensioned to receive a screw which serves to expand the plug as the screw is screwed into the plug. The screw may extend through the head to secure the latter or may be inserted on temporary removal of the head.

The head may, of course, be of any suitable shape.

As can be seen in Figure 4, the surface of the head 60 receiving the reflector, and the reflector, is of concave shape, although any preferred curvature may be used.

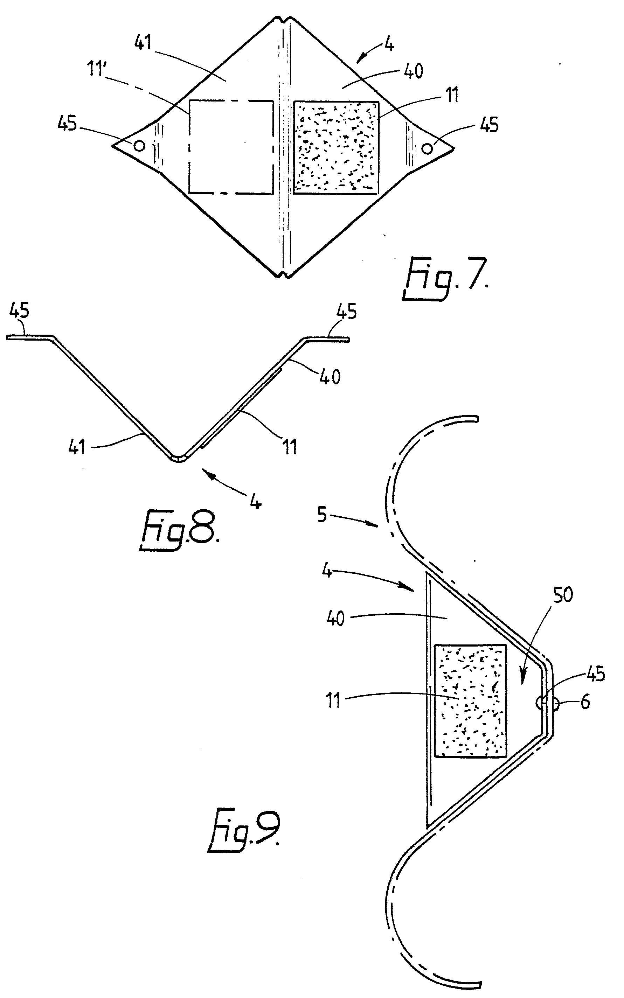

When the plug 2 is to be inserted through a hole in, for example, a sheet metal crash barrier, the plug is retained in place by a retaining washer 70 (Figure 6) which has two radially inwardly projecting lugs 72 to engage the barbs 23.

Referring to Figures 7 and 9 the support member of the reflector device is shown consisting of a plate 4 of sheet metal angled to provide two faces 40, 41 at least one of which receives a reflector or reflective material 11. Although the reflector is shown proud of the face 40, the latter may be provided with a recess in which the reflector is received conveniently flush with the surface 40. Each face 40, 41 has mutually inclined sides 42 converging to a mounting lug 45 and the arrangement is such that the angled plate is adapted to have a locating engagement with the longitudinal recess 50 of a steel crash barrier 5 which is usually provided along the central reservation of a motorway or in other locations in relation to a motorway or roadway. The plate 4 is readily secured by the lugs 45 to the recessed part 50 of the barrier 5 by screws, rivets 6 or other suitable fixing devices, or by welding e.g. spot welding.

The reflector devices can be readily fitted in this way at suitable spaced apart positions of use along a crash barrier 5 and as will be apparent from Figure 5, each reflector at 11 faces the headlamps of oncoming traffic along an adjacent carriageway where the traffic observes the lefthand rule of the road. Particularly in fog or other conditions of poor visability the reflectors 11 provide guidance to drivers of motor vehicles on the carriageway and are at a level closely adjacent to that of the headlamps for optimum reflection.

Normally the other face 41 of the angled plate 4 is not seen by vehicle drivers on either carriageway but may nevertheless be provided with reflective material as indicated at 11' i.e. for use when contra-flow operation of traffic on the motorway is in force.

If desired the entire or substantially the entire outer surface of the angled plate 4 may be faced or coated with reflective material whilst instead of a plate a cast or moulded mounting member e.g. of durable plastics material may be employed of a similar shape for locating engagement and attachment in the barrier recess 50 and to provide the reflector bearing face 40 or faces 40, 41.

Here again the reflective material 11 (and 11') is preferably of the retro-reflective type already referred to above.

0171269

CLAIMS:

1. A light reflecting device comprising a body having light reflecting means thereon, and retaining means adapted for retentive engagement with an opening therefor in a suitable structure such as brickwork, woodwork or the like whereby said light reflecting means is presented for light reflecting action.

2. A device as claimed in claim 1 wherein said retaining means comprise barbs on an outer surface of said body.

3. A device as claimed in claim 1 or 2 wherein said body is of generally circular cross section and said retaining means are formed on a radially outer surface thereof.

4. A device as claimed in claim 3 wherein said body is tubular and said reflecting means is located at or adjacent one end thereof.

5. A device as claimed in any of claims 1 to 4 wherein said body has an enlarged head at one end thereof mounting said reflecting means.

6. A device as claimed in claim 1 wherein said body is in the form of a plate.

Fig.1.

Fig.2.

Fig.3.

Fig.4.

Fig.5.

Fig.6.

Fig.7.

Fig.8.

Fig.9.